# EUROPEAN PATENT SPECIFICATION

(11) **EP 1 185 921 B1**
(45) Date of publication and mention of the grant of the patent: **13.08.2003**
(21) Application number: 00929659.1
(22) Date of filing: 08.05.2000
(51) Int. Cl.: G06F 3/023, G06F 3/033

(54) **ERRONEOUS KEYBOARD ENTRY CORRECTION METHOD**
METHODE ZUR KORREKTUR IRRTÜMLICHER TASTATUREINGABEN
METHODE DE CORRECTION D'ENTREE ERRONEE AU CLAVIER

(30) Priority: 07.05.1999 GB 9910525
(43) Date of publication of application: 13.03.2002
(73) Proprietor: Psion Digital Limited, London NW8 8NQ (GB)
(72) Inventor: HEALEY, Nicholas, London W5 3HR (GB)
(74) Representative: Langley, Peter James
(86) International application number: GB0001634
(87) International publication number: WO00068771

(56) References cited:
- US-A- 5 748 512
- US-A- 5 847 697
- PATENT ABSTRACTS OF JAPAN vol. 011, no. 287 (P-617), 17 September 1987 (1987-09-17) & JP 62 084319 A (MATSUSHITA ELECTRIC IND CO LTD), 17 April 1987 (1987-04-17)
- PATENT ABSTRACTS OF JAPAN vol. 017, no. 658 (P-1654), 6 December 1993 (1993-12-06) & JP 05 216570 A (SHARP CORP), 27 August 1993 (1993-08-27)
- PATENT ABSTRACTS OF JAPAN vol. 017, no. 040 (P-1475), 26 January 1993 (1993-01-26) & JP 04 256118 A (NEC ENG LTD), 10 September 1992 (1992-09-10)
- "KEYBOARD MEMBRANE STRUCTURE FOR SHIFT KEYS" IBM TECHNICAL DISCLOSURE BULLETIN,US,IBM CORP. NEW YORK, vol. 32, no. 2, 1 July 1989 (1989-07-01), page 35 XP000033331 ISSN: 0018-8689

## Description

### Field of the invention

This invention relates to a method for correcting erroneous keyboard entries, such as result in misspellings or other kinds of input errors.

### Description of the Prior Art

Sophisticated word processing programs such as Microsoft Word include advanced spell check programs which can compare words input to a computer using a conventional QWERTY keyboard against words in a dictionary stored in the computer. Touch screen keyboards, such as are used in personal organisers and some communicators, are particularly prone to mis-hits because of the small size of the keyboard and the absence of discrete keys.

Spell check programs are also found in hand held, self contained units, such as those from Franklin Computer Corporation. Spell-check programs have been the subject of intense scrutiny for several decades and many different approaches have been devised for effective spell-checking. Reference, for example, may be made to US 5218536 in the name of Franklin Electronic Publishers, Inc. which discloses a spell-check program which includes comparing an input word to a dictionary using phonetic comparison, typographic comparison, vowel and consonant typographic comparison and consonant phonetic comparison. The exact form of comparison which is undertaken in contemporary spell check programs involves sophisticated pattern matching algorithms which are disclosed in the literature. Reference may also be made to JP 05216570 A, JP 04 256118 A and IBM Technical Disclosure Bulletin (vol. 32, no. 2, July 1989, page 35) which show measuring a time interval between touch actions. But none use this information to infer that an erroneous keyboard entry may have been made.

### Statement of the Present Invention

In a first aspect of the present invention, there is provided a method of correcting an input to a device, which a user interacts with by a series of touch actions, comprising the steps of:
(a) detecting each touch action;
(b) measuring the time interval between two or more touch actions;
(c) generating a first output in dependence on the two or more touch actions;
(d) checking the first output against a table of allowed outputs; and
(e) generating a revised output using the table of allowed outputs if the first output is in error and if the time interval satisfies a predetermined time interval criterion.

Hence the present invention is predicated on the insight that input errors are often revealed by closely monitoring the timing of the associated touch inputs, such as the key up and key down actions.

For example, the device may be a physical or touch screen keyboard so that a touch action might be touching a first letter key and a subsequent touch action might be releasing the first letter key or touching, within a predetermined time interval, a second letter key; the first output then relates to the generation of a word using the letters in the key touch sequence, a dictionary look up process then indicates that the generated word is not an allowed word and the revised output is associated with transposing the order of the first and second letter keys to generate a word which is present in the look up dictionary.

The touch action could also be touching or releasing the shift key, followed by another touch action which occurs after the shift key has been released, so that there is a time interval between releasing the shift key and hitting the next key. The revised output is then that output which would have been generated if the next touch action had in fact occurred whilst the shift key had been selected. This corrects the frequently occurring input error of inadvertently releasing the shift key before hitting the key which should be shifted. For the purposes of this specification, a shift key is any modifier key, such as the Ctrl, Alt and Shift keys on a PC keyboard.

The revised output need not necessarily be an automatically corrected version of the input; it may for example, be a warning message or some other action.

The predetermined time interval threshold may be fixed or it may vary as a function of the time interval between one or more touch actions. In the latter case, the normal interval between keystrokes is measured and the time interval between touch actions which is a predetermined amount less than the average time interval, constitutes the threshold below which a revised output may be generated. Hence, a system using this method may accord a relatively slow typist a much longer time interval threshold than a very rapid typist.

In two other aspects of the invention, there is provided a computing device and a computer program operable to perform the above methods.

### Detailed Description

In a preferred embodiment, the correction of erroneous input on keyboard devices is based on knowledge of the exact timing of individual key actions. The device records the exact times of each key action, which in this embodiment are the times of each key-down and each key-up, and uses this information.

The first application is to catch accidental transpositions during typing. If two characters are entered with a very small time period between them, and the word they are in does not spell correctly using a conventional spell check program resident in the device, the device then spell checks the alternative word with those two characters transposed and, if it is an allowed word, weights this output heavily. This allowed output may be automatically inserted in place of the non-allowed word, or the option of using the allowed word may be presented to the user on a display of the device.

Accidental transpositions can also be of command keys; for example one sequence of command keys can result in a non-allowed output or a very infrequently used output, but the transposed command key sequence can be a much more common output. In the present embodiment, the system detects command sequences which follow each other within a predetermined time interval and compares the likelihood of the output associated with the actual command key inputs with the likelihood of the output associated with the transposed command key inputs. Where the likelihood of the transposed key output is sufficiently larger than the output associated with the actual input, the transposed key output is selected in preference.

A second use is to catch the case where a Shift key is pressed and released fractionally before a character iskey is pressed down or selected. If the character key is pressed within a very small time period of the Shift key being released, the device automatically corrects the input to the Shifted version of the character key that was pressed. This relies on the system determining that a shift action on its own is meaningless and therefore not allowed through a comparison with a table of allowed actions.

## Claims

1. A method of correcting an input to a device, which a user interacts with by a series of touch actions, comprising the steps of:
(a) detecting each touch action;
(b) measuring the time interval between two or more touch actions;
(c) generating a first output in dependence on the two or more touch actions;
(d) checking the first output against a table of allowed outputs; and
(e) generating a revised output using the table of allowed outputs if the first output is in error and if the time interval satisfies a predetermined time interval criterion.

2. The method of correcting as claimed in Claim 1 in which the device is a physical or touch screen keyboard.

3. The method of correcting as claimed in any preceding Claim in which the touch action is the action of pressing or releasing a key.

4. The method of correcting as claimed in any preceding Claim in which the first output is a word.

5. The method of correcting as claimed in any preceding Claim in which a touch action is touching or releasing the shift key; and the predetermined time interval criterion is that the next touch action occurs after the shift key has been released; and the revised output is that output which would have been generated if the next touch action had in fact occurred whilst the shift key had been selected.

6. The method of correcting as claimed in any preceding Claim in which a touch action is touching a first letter key; and a subsequent touch action is touching a second letter key; the predetermined time interval criterion is that the subsequent touch action occurs within a predetermined time interval of the first touch action; the first output relates to the generation of a word using the letters in the key touch sequence; a dictionary look up process indicates that the generated word is not an allowed word; and the revised output is associated with transposing the order of the first and second letter keys to generate a word which is allowed by the look up dictionary.

7. The method of any preceding Claim in which a first touch action is touching a first command key; and the next touch action is touching a second command key; the predetermined time interval criterion is that the next touch action occurs within a predetermined time interval of the first touch action; the output associated with that sequence of commands is either not allowed or an output of a first likelihood of occurrence; the revised output is that output which would have been generated if the second command key had been selected prior to the first; and the revised output has a higher likelihood of occurrence than the first likelihood.

8. The method of any preceding Claim in which the revised output is a warning message.

9. The method of any preceding Claim in which the predetermined time interval criterion varies as a function of the time interval between one or more touch actions.

10. A computing device operable to perform the method defined in Claims 1 - 9.

11. A computer program operable to perform the method of Claims 1-9.

## Patentansprüche

1. Verfahren zum Korrigieren einer Eingabe in ein Gerät, mit dem ein Benutzer durch eine Reihe von Berührungsakrionen interagiert, umfassend die folgenden Schritte:
(a) Erfassen jeder Berührungsaktion;
(b) Messen des Zeitintervalls zwischen zwei oder mehr Berührungsaktionen;
(c) Generieren einer ersten Ausgabe in Abhängigkeit von den zwei oder mehr Berührungsaktionen;
(d) Prüfen der ersten Ausgabe anhand einer Tabelle zulässiger Ausgaben; und
(e) Generieren einer revidierten Ausgabe anhand der Tabelle zulässiger Ausgaben, wenn die erste Ausgabe fehlerhaft ist und wenn das Zeitintervall ein vorbestimmtes Zeitintervallkriterium erfüllt.

2. Korrekturverfahren nach Anspruch 1, bei dem das Gerät eine physikalische Tastatur oder eine Berührungsbildschirm-Tastatur ist.

3. Korrekturverfahren nach einem der vorherigen Ansprüche, bei dem die Berührungsaktion die Tätigkeit des Drückens oder Loslassens einer Taste ist.

4. Korrekturverfahren nach einem der vorherigen Ansprüche, bei dem die erste Ausgabe ein Wort ist.

5. Korrekturverfahren nach einem der vorherigen Ansprüche, bei dem eine Berührungsaktion das Berühren oder Loslassen der Umschalttaste ist; und das vorbestimmte Zeitintervallkriterium ist, dass die nächste Berührungsaktion nach dem Loslassen der Umschalttaste erfolgt; und die revidierte Ausgabe die Ausgabe ist, die generiert worden wäre, wenn die nächste Berührungsaktion in der Tat erfolgt wäre, während die Umschalttaste selektiert wurde.

6. Korrekturverfahren nach einem der vorherigen Ansprüche, bei dem eine Berührungsaktion das Berühren einer ersten Buchstabentaste ist; und eine nachfolgende Berührungsaktion das Berühren einer zweiten Buchstabentaste ist; das vorbestimmte Zeitintervallkriterium ist, dass die nachfolgende Berührungsaktion innerhalb eines vorbestimmten Zeitintervalls der ersten Berührungsaktion erfolgt; die erste Ausgabe sich auf die Generierung eines Wortes mit den Buchstaben in der Tastenberührungssequenz bezieht; ein Wörterbuchnachschlagprozess anzeigt, dass das generierte Wort kein zulässiges Wort ist; und die revidierte Ausgabe mit dem Transponieren der Reihenfolge der ersten und zweiten Buchstabentasten assoziiert ist, um ein Wort zu generieren, dass vom Nachschlagwörterbuch zugelassen wird.

7. Verfahren nach einem der vorherigen Ansprüche, bei dem eine erste Berührungsaktion das Berühren einer ersten Befehlstaste ist; und die nächste Berührungsaktion das Berühren einer zweiten Befehlstaste ist; das vorbestimmte Zeitintervallkriterium ist, dass die nächste Berührungsaktion innerhalb eines vorbestimmten Zeitintervalls der ersten Berührungsaktion erfolgt; die mit dieser Sequenz von Befehlen assoziierte Ausgabe entweder nicht zulässig ist oder eine Ausgabe einer ersten Auftretenswahrscheinlichkeit ist; die revidierte Ausgabe die Ausgabe ist, die generiert worden wäre, wenn die zweite Befehlstaste vor der ersten selektiert worden wäre; und die revidierte Ausgabe eine Auftretenswahrscheinlichkeit hat, die höher ist als die erste Auftretenswahrscheinlichkeit.

8. Verfahren nach einem der vorherigen Ansprüche, bei dem die revidierte Ausgabe eine Warnmeldung ist.

9. Verfahren nach einem der vorherigen Ansprüche, bei dem das vorbestimmte Zeitintervallkriterium in Abhängigkeit von dem Zeitintervall zwischen einer oder mehreren Berührungsaktionen variiert.

10. Computergerät zum Durchführen des in den Ansprüchen 1 - 9 definierten Verfahrens.

11. Computerprogramm zum Durchführen des Verfahrens gemäß den Ansprüchen 1 - 9.

## Revendications

1. Méthode de correction d'une entrée sur un périphérique, périphérique avec lequel un utilisateur dialogue par le biais d'une série d'opérations tactiles, comportant les étapes suivantes :
(a) la détection de chaque opération tactile ;
(b) la mesure de l'intervalle de temps entre deux opérations tactiles ou plus ;
(c) la génération d'une première sortie en fonction des deux opérations tactiles ou plus ;
(d) la vérification de la première sortie par rapport à un tableau des sorties autorisées ; et
(e) la génération d'une sortie révisée par l'utilisation du tableau des sorties autorisées si la première sortie est erronée et si l'intervalle de temps satisfait à un critère d'intervalle de temps prédéterminé.

2. Méthode de correction suivant la revendication 1, dans laquelle le périphérique est un clavier physique ou tactile.

3. Méthode de correction suivant l'une quelconque des revendications précédentes dans laquelle l'opération tactile est l'opération qui consiste à appuyer sur une touche ou à lâcher une touche.

4. Méthode de correction suivant l'une quelconque des revendications précédentes dans laquelle la première sortie est un mot.

5. Méthode de correction suivant l'une quelconque des revendications précédentes dans laquelle une opération tactile consiste à toucher ou à lâcher la touche Majuscule ; et dans laquelle le critère d'intervalle de temps prédéterminé est que la prochaine opération tactile a lieu une fois la touche Majuscule lâchée ; et dans laquelle la sortie révisée est cette sortie qui aurait été générée si l'opération tactile suivante avait en fait eu lieu pendant que la touche Majuscule était sélectionnée.

6. Méthode de correction suivant l'une quelconque des revendications précédentes dans laquelle une opération tactile consiste à toucher une première touche de type lettre ; et dans laquelle une opération tactile postérieure consiste à toucher une deuxième touche de type lettre ; le critère d'intervalle de temps prédéterminé est que l'opération tactile postérieure a lieu dans l'intervalle de temps prédéterminé de la première opération tactile ; la première sortie se rapporte à la génération d'un mot formé par les lettres dans la séquence d'opérations tactiles des touches ; un procédé de consultation de dictionnaire indique que le mot généré n'est pas un mot autorisé ; et la sortie révisée est associée à la transposition de l'ordre de la première et de la deuxième touches de type lettre afin de générer un mot qui est autorisé par le dictionnaire de consultation.

7. Méthode suivant l'une quelconque des revendications précédentes dans laquelle une première opération tactile consiste à toucher une première touche de type commande ; et dans laquelle l'opération tactile suivante consiste à toucher une deuxième touche de type commande ; le critère d'intervalle de temps prédéterminé est que l'opération tactile suivante a lieu dans un intervalle de temps prédéterminé de la première opération tactile ; la sortie associée à cette séquence de commandes est soit non autorisée, soit une sortie d'une première probabilité d'occurrence ; la sortie révisée est cette sortie qui aurait été générée si la deuxième touche de type commande avait été sélectionnée avant la première ; et la sortie révisée a une probabilité d'occurrence supérieure à la première probabilité.

8. Méthode suivant l'une quelconque des revendications précédentes dans laquelle la sortie révisée est un message d'avertissement.

9. Méthode suivant l'une quelconque des revendications précédentes dans laquelle le critère d'intervalle de temps prédéterminé varie en fonction de l'intervalle de temps entre une ou plusieurs opérations tactiles.

10. Périphérique informatique exploitable pour exécuter la méthode définie par les revendications 1 à 9.

11. Programme informatique exploitable pour exécuter la méthode définie par les revendications 1 à 9.
